(19) Europäisches Patentamt
European Patent Office
Office européen des brevets

(11) EP 2 557 135 B1

(12) **EUROPEAN PATENT SPECIFICATION**

(45) Date of publication and mention of the grant of the patent:
**05.11.2014 Bulletin 2014/45**

(21) Application number: **11766114.0**

(22) Date of filing: **05.04.2011**

(51) Int Cl.:
***C09J 9/00*** (2006.01) ***C09J 133/04*** (2006.01)
***C09J 5/00*** (2006.01) ***G06F 3/041*** (2006.01)

(86) International application number:
**PCT/KR2011/002356**

(87) International publication number:
**WO 2011/126263 (13.10.2011 Gazette 2011/41)**

(54) **ADHESIVE COMPOSITION, ADHESIVE SHEET, AND TOUCH PANEL**
HAFTZUSAMMENSETZUNG, HAFTFOLIE UND BERÜHRUNGSBILDSCHIRM
COMPOSITION ADHÉSIVE, FEUILLE ADHÉSIVE ET PANNEAU TACTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2010 KR 20100031101**

(43) Date of publication of application:
**13.02.2013 Bulletin 2013/07**

(73) Proprietor: **LG Hausys, Ltd.**
**Seoul 150-721 (KR)**

(72) Inventors:
- **LEE, Yong-Hoon**
**Cheongju-si**
**Chungcheongbuk-do 361-370 (KR)**
- **LEE, Eok-Hyung**
**Cheongju-si**
**Chungcheongbuk-do 361-727 (KR)**
- **HAN, Hak-Rhim**
**Cheongju-si**
**Chungcheongbuk-do 361-300 (KR)**
- **CHOI, Won-Gu**
**Cheongju-si**
**Chungcheongbuk-do 361-758 (KR)**
- **SONG, Min-Seok**
**Daejeon 305-810 (KR)**
- **KIM, Jang-Soon**
**Gyeonggi-do 463-889 (KR)**

(74) Representative: **Plougmann & Vingtoft A/S**
**Rued Langgaards Vej 8**
**2300 Copenhagen S (DK)**

(56) References cited:
**EP-A1- 0 955 336** **US-A- 4 808 639**
**US-A- 5 753 362** **US-A- 5 880 203**
**US-A1- 2008 213 584**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 557 135 B1

## Description

[Technical Field]

The present invention relates to an adhesive composition, an adhesive sheet, and a touch panel.

[Background Art]

Recently, the market for mobile communication devices, such as mobile phones, PHSs, and PDAs, has been growing. Such mobile communication devices are moving towards slimness, lightweight, low-power consumption, high resolution, and high brightness.

In particular, a device equipped with a touch panel or touchscreen as an input unit has a structure in which a transparent conductive plastic film, for example, a polyethylene terephthalate (PET) base film having a conductive thin layer of indium tin oxide (ITO) formed on one side thereof, is stacked on a conductive glass, a reinforcing material, or a decorative film through an adhesive film in consideration of weight reduction and breakage prevention.

An adhesive for attaching a transparent conductive film in a touchscreen or touch panel needs to have various physical properties, such as surface leveling performance for relieving an uneven surface due to a decorative film, durability for suppressing generation of curls or bubbles when exposed to severe conditions, e.g., high temperature or high humidity, cuttability for preventing the adhesive from sticking out or from being squashed when cut, and excellent adhesion to various substrates, as well as optical characteristics and workability.

Particularly, in manufacture of a touch panel or touchscreen, a process of curing an adhesive composition is performed at 140°C or more for 2 hours or more. Also, a process of bonding an anisotropic conductive foil (ACF) in assembly of a printed circuit board (PCB) is performed at a high temperature of 120°C or more. In these processes, an adhesive composition or adhesive having low heat resistance can cause air pockets, bubbles, separation, or curls between the adhesive and an adherend (e.g., a transparent conductive film).

Korean Patent Publication No. 2006-0043847 discloses an adhesive composition, which is a transparent adhesive used for a touch panel, and includes an acrylic polymer having a weight average molecular weight of 500,000 to 900,000 and a low molecular weight oligomer having a weight average molecular weight of 3,000 to 6,000.

However, the adhesive disclosed in this publication generates air pockets or bubbles between the adhesive and an adherend, or causes panel warpage, separation, or curling due to considerably low heat resistance when applied to a high-temperature process at about 100°C or more.

EP0955336 (Lohmann GmbH and co KG) discloses a polymer blend for making pressure-sensitive adhesives contains copoly(meth)acrylate (I) and gamma - (meth)acryloxypropyl-trialkoxysilane polymer(s) (II).

Cross-reference is made to co-pending EP,A,2 557 136 which also relates to an adhesive composition for a touch panel, an adhesive film, and a touch panel.

[Disclosure]

[Technical Problem]

The present invention is directed to an adhesive composition, an adhesive sheet, and a touch panel.

[Technical Solution]

One aspect of the present invention provides an adhesive composition comprising a base resin and a polyfunctional crosslinking agent, and satisfying

Equation 1:

$$X_1 \geq 6\ kg/cm^2$$

where $X_1$ represents a dynamic shear strength value of an adhesive, which is a cured sheet product of the adhesive composition, the dynamic shear strength of the adhesive being measured at 140°C and a crosshead speed of 0.8 mm/sec using a sample prepared by attaching one side of the adhesive to one surface of an indium tin oxide (ITO) polyethylene terephthalate PET film opposite an ITO surface of the PET film and the other side thereof to a glass substrate, followed by leaving the adhesive at room temperature for 24 hours.

Another aspect of the present invention provides an adhesive sheet for a touch panel, which comprises an

adhesive layer containing a cured product of the adhesive composition.

A further aspect of the present invention provides a touch panel, which comprises a transparent plastic substrate; and an adhesive layer formed on an upper surface of the transparent plastic substrate and including a cured product of the adhesive composition.

[Advantageous Effects]

According to the present invention, an adhesive composition, particularly an adhesive composition for a touch panel, is prepared without using a low molecular weight polymer such as oligomers. Accordingly, the adhesive compositions or adhesives according to the present invention exhibit excellent heat resistance under high-temperature conditions in a curing process or PCB assembly process in manufacture of a touch panel. In addition, the adhesive compositions or adhesives according to the present invention exhibit superior wettability, optical characteristics, cuttability, workability and durability, and do not cause panel warpage, separation, or curling.

[Description of Drawings]

Fig. 1 illustrates a process of measuring dynamic shear strength of an adhesive according to one embodiment of the present invention;
Fig. 2 illustrates a process of measuring static shear maintenance time of an adhesive according to one embodiment of the present invention;
Fig. 3 is a side-sectional view of an adhesive sheet according to one embodiment of the present invention;
Fig. 4 is a side-sectional view of an adhesive sheet according to another embodiment of the present invention; and
Fig. 5 is a view of a touch panel according to one embodiment of the present invention.

[Best Mode]

The present invention relates to an adhesive composition, which comprises base resin and a polyfunctional crosslinking agent and satisfies the following

Equation 1:

$$X_1 \geq 6 \text{ kg/cm}^2,$$

where $X_1$ represents a dynamic shear strength value of an adhesive, which is a cured sheet product of the adhesive composition. Here, the dynamic shear strength of an adhesive is measured at 140°C and a crosshead speed of 0.8 mm/sec using a sample prepared by attaching one side of the adhesive to one surface of an ITO PET film opposite an ITO surface of the PET film and the other side thereof to a glass substrate, followed by storage at room temperature for 24 hours.

Next, the adhesive composition according to the present invention will be described in more detail.

The adhesive composition comprises a base resin and a polyfunctional crosslinking agent, and has dynamic shear strength satisfying Equation 1, as evaluated by a dynamic shear test under specified conditions. That is, the adhesive according to the present invention has a dynamic shear strength of 6 kg/cm$^2$ or more, preferably 6.5 to 15 kg/cm$^2$, and more preferably 6.5 to 10 kg/cm$^2$, as measured at 140°C and a crosshead speed of 0.8 mm/sec.

In the present invention, the dynamic shear strength of the adhesive may be measured using an adhesive comprised of the adhesive composition according to the present invention at 140°C and a crosshead speed of 0.8 mm/sec.

Specifically, Fig. 1 illustrates a process of measuring dynamic shear strength of an adhesive according to one embodiment. Referring to Fig. 1, an adhesive layer 11 prepared using the adhesive composition according to the present invention is attached to a glass substrate 12 and a PET film 14 of an ITO PET film 15, which includes an ITO surface 13 on one surface of the PET film 14, so as to be interposed between the glass substrate 12 and the ITO PET film 15, thereby preparing a sample. In this case, the adhesive layer 11 is attached to one surface of the ITO PET film 15 opposite the ITO surface 13. Here, attaching the adhesive layer 11 to the glass substrate 12 and the ITO PET film 15 may be carried out by rolling a 2 kg roller back and forth five times according to ASTM D1002. Further, the adhesive layer 11 used for the test may have a size of 2.5 cm (1 in) x 2.5 cm (1 in )x 50 μm (width x length x thickness). Then, the prepared sample 10 shown in Fig. 1 is left at room temperature for 24 hours, and then evaluated as to dynamic shear strength at 140°C and a crosshead speed of 0.8 mm/sec. More specifically, the dynamic shear strength of the adhesive 11 may be

measured by pulling the glass substrate 12 and the ITO PET film 15 in opposite directions (arrow directions in Fig. 1) at a crosshead speed of 0.8 mm/sec using a tensile tester until the glass substrate 12 and/or the ITO PET film 15 starts separating from the adhesive 11.

In the present invention, if the dynamic shear strength of the adhesive is 6.0 kg/cm$^2$ or more, the adhesive has excellent wettability to a variety of adherends, optical characteristics, cuttability, workability, durability and particularly superior heat resistance, and thus does not cause warpage, separation, and curling under high-temperature conditions.

The adhesive composition according to the present invention may also satisfy Equation 2:

[Equation 2]

$$X_2 \geq 10 \text{ min},$$

where $X_2$ represents a maintenance time of an adhesive, which is a cured sheet product of the adhesive composition, i.e., a static shear maintenance time, measured using a sample at 140°C by applying a load of 2 kg to an ITO PET film. Here, the sample is prepared by attaching one side of the adhesive to a surface of the ITO PET film opposite an ITO surface and the other side thereof to a glass substrate, followed by storage at room temperature for 24 hours.

Fig. 2 illustrates a process of measuring static shear maintenance time of an adhesive according to one embodiment of the present invention.

Referring to Fig. 2, the static shear maintenance time of the adhesive may be measured as follows: an adhesive 11 is prepared from an adhesive composition according to one embodiment of the present invention and is attached to adherends, for example, a glass substrate 12 and an ITO PET film 15, to be interposed therebetween, followed by evaluation as to static shear maintenance time by applying a predetermined load to one of the adherends. Specifically, as shown in Fig. 2, an adhesive layer 11 prepared from the adhesive composition according to the embodiment is attached to the glass substrate 12 and a PET film 14 of the ITO PET film 15 including an ITO surface 13 on one surface of the PET film 14, thereby preparing a sample. In this case, the adhesive layer 11 is attached to the other surface of the PET film 14 opposite the ITO surface 13. Here, attaching the adhesive layer 11 to the glass substrate 12 and the ITO PET film 15 may be carried out by rolling a 2 kg roller back and forth five times according to ASTM D1002. Further, the adhesive layer 11 used for the test may have a size of 2.5 cm (1 in) x 2.5 cm (1 in x 50 μm (width x length x thickness). Then, the prepared sample 20 shown in Fig. 2 is left at room temperature for 24 hours, and then evaluated as to static shear maintenance time by applying a load to the ITO PET film 15 using a 2 kg weight 21 at 140°C. More specifically, the load is applied until the ITO PET film 15 or the glass substrate 12 is separated from the adhesive layer 11, and the separation time is calculated as the static share maintenance time.

The adhesive according to the present invention has a static shear maintenance time of 10 minutes or longer, preferably 15 minutes or longer, and more preferably 20 minutes or longer. If the static shear maintenance time of the adhesive is 10 minutes or longer, the adhesive has superior heat resistance and thus does not cause warpage, separation, and curling under high-temperature conditions.

In the present invention, an upper limit of the static shear maintenance time is, for example, 80 minutes or less, preferably 60 minutes or less, and more preferably 50 minutes or less.

There is no particular restriction as to the kind of the base resin included in the adhesive composition according to the present invention. For example, the base resin may be any adhesive resin commonly used in the art, such as acrylic resins, rubber, urethane, silicone, and ethylene vinyl acetate (EVA) resins. In some embodiments, the base resin may be an acrylic resin which has excellent optical characteristics, such as transparency, and superior resistance to oxidation and yellowing.

When the base resin is an acrylic resin, the acrylic resin may have a weight average molecular weight of 1,000,000 or more. According to the present invention, the weight average molecular weight is obtained based on polystyrene conversion in GPC (Gel Permeation Chromatography). If the acrylic resin has a weight average molecular weight of 1,000,000 or more, the adhesive can have excellent heat resistance and durability and does not contaminate an adherend by transferring to the adherend in re-peeling. If the weight average molecular weight of the acrylic resin is less than 1,000,000, the adhesive can have reduced heat resistance and deteriorated workability, such as cuttability.

In the present invention, an upper limit of the weight average molecular weight of the acrylic resin is, 3,000,000 or lower, preferably 2,500,000 or lower in view of coatability.

In the present invention, the acrylic resin may comprise, for example, a polymer of a monomer mixture including a (meth)acrylic acid ester monomer and a crosslinking monomer.

There is no particular restriction as to the kind of the (meth)acrylic acid ester monomer, which may include, for example, alkyl (meth)acrylates. In this case, when too long of an alkyl group is included in the monomer, cohesion of the cured product can decrease and the glass transition temperature or tack of the cured product cannot properly be adjusted. Thus, alkyl (meth)acrylates having a C1 to C14, preferably C1 to C8 alkyl group, are used. Examples of such

monomers may include methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isobornyl (meth)acrylate, and isononyl methacrylate, which may be used alone or as mixtures.

The crosslinking monomer included in the monomer mixture is a monomer including both a copolymerizable functional compound (e.g., carbon-carbon double bond) and a crosslinking functional compound in the molecular structure, and may provide a polymer containing a crosslinking functional compound reacting with the polyfunctional crosslinking agent.

Examples of the crosslinking monomer may include a hydroxyl group containing monomer, a carboxylic group containing monomer, and a nitrogen containing monomer, which may be used alone or as mixtures. In some embodiments, a carboxylic group containing monomer is advantageously used as the crosslinking monomer.

Examples of the hydroxyl group containing monomer may include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, or 2-hydroxypropylene glycol (meth)acrylate. Examples of the carboxylic group containing monomer may include acrylic acid, methacrylic acid, 2-(meth)acryloyloxy acetic acid, 3-(meth)acryloyloxy propyl acid, 4-(meth)acryloyloxy butyl acid, an acrylic acid dimer, itaconic acid, or maleic acid. Examples of the nitrogen containing monomer may include 2-isocyanatoethyl (meth)acrylate, 3-isocyanatopropyl (meth)acrylate, 4-isocyanatobutyl (meth)acrylate, (meth)acryl amide, N-vinylpyrrolidone, or N-vinylcaprolactam.

In the present invention, the monomer mixture includes 80 to 99.9 parts by weight of the (meth)acrylic acid ester monomer and 0.1 to 20 parts by weight of the crosslinking monomer, preferably 90 to 99.9 parts by weight of the (meth)acrylic acid ester monomer and 0.1 to 20 parts by weight of the crosslinking monomer. Within this range, the adhesive may have excellent reliability, handling properties, durability, and re-peeling properties and can effectively prevent separation or peeling due to decrease in initial adhesive strength.

Unless otherwise indicated in the specification, "parts by weight" denotes "ratio by weight."

In the present invention, the monomer mixture may further include a comonomer represented by Formula 1 in order to adjust the glass transition temperature of a polymer and to impart other functions to the polymer:

[Formula 1]

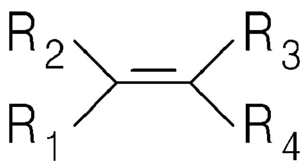

,

where $R_1$ to $R_3$ are each independently hydrogen or an alkyl group; and $R_4$ is a cyano group, an alkyl-substituted or unsubstituted phenyl group, an acetyloxy group, or $COR_5$, wherein $R_5$ is an alkyl or alkoxyalkyl-substituted or unsubstituted amino or glycidyloxy group.

In $R_1$ to $R_5$ in Formula 1, alkyl or alkoxy is C1 to C8 alkyl or alkoxy, preferably methyl, ethyl, methoxy, ethoxy, propoxy, or butoxy.

Examples of the comonomer represented by Formula 1 may include, a nitrogen containing monomer, such as (meth)acrylonitrile, N-methyl (meth)acrylamide or N-butoxymethyl (meth)acrylamide; styrene monomers, such as styrene or methyl styrene; glycidyl (meth)acrylate; and carboxylic acid vinyl esters, such as vinyl acetate, which may be used alone or as mixtures. When the comonomer is added to the monomer mixture, the comonomer may be present in an amount of 20 parts by weight or less based on the amount of the (meth)acrylic acid ester monomer or the crosslinking monomer. If the amount of comonomer is greater than 20 parts by weight, flexibility and/or peel strength of the adhesive may be deteriorated.

In the present invention, there is no particular restriction as to a method of manufacturing an acrylic resin by polymerizing the monomer mixture including the foregoing ingredients. For example, a general polymerization method, such as solution polymerization, photo-polymerization, bulk polymerization, suspension polymerization, or emulsion polymerization, may be used. In the present invention, solution polymerization is preferably used to prepare the acrylic resin in view of transparency, water resistance, and cost.

The adhesive composition according to the present invention further includes the polyfunctional crosslinking agent, and cohesion or adhesion of the cured product may be adjusted based on the amount of the polyfunctional crosslinking agent.

The polyfunctional crosslinking agent used in the present invention may include, for example, commonly used

crosslinking agents, such as isocyanate compounds, epoxy compounds, aziridine compounds, and chelating agents. Examples of the isocyanate compound may include at least one selected from the group consisting of tolylene diisocyanate, xylene diisocyanate, diphenylmethane diisocyanate, hexamethylene diisocyanate, isophorone diisocyanate, tetramethylxylene diisocyanate, naphthalene diisocyanate, and adducts of at least one of these isocyanate compounds and a polyol (e.g., trimethylolpropane). Examples of the epoxy compound may include at least one selected from the group consisting of ethylene glycol diglycidyl ether, triglycidyl ether, trimethylolpropane triglycidyl ether, N,N,N',N'-tetraglycidyl ethylene diamine, and glycerin diglycidyl ether. Examples of the aziridine compound may include at least one selected from the group consisting of N,N'-toluene-2,4-bis(1-aziridinecarboxamide), N,N'-diphenylmethane-4,4'-bis(1-aziridinecarboxamide), triethylenemelamine, bisisophthaloyl-1-(2-methylaziridine), and tri-1-aziridinylphosphine oxide. Examples of the chelating agent may include compounds obtained by coordinating acetylacetone or ethyl acetoacetate with a polyvalent metal, such as aluminum, iron, zinc, tin, titanium, antimony, magnesium, and/or vanadium.

The polyfunctional crosslinking agent is present in an amount of 0.01 to 10 parts by weight, preferably 0.01 to 5 parts by weight, based on 100 parts by weight of the base resin. If the amount of the crosslinking agent is less than 0.01 parts by weight, cohesion of the cured product can be deteriorated, causing bubbles under high-temperature conditions. If the amount of the crosslinking agent is greater than 10 parts by weight, the adhesive is excessively cured, causing decrease in adhesive strength and peel strength. Thus, peeling or separation between layers can occur, thereby reducing durability.

The adhesive composition according to the present invention may further include a silane coupling agent. The coupling agent functions to enhance adhesion and adhesive stability of the cured product to an adherend, particularly a glass substrate, thus improving heat resistance and moisture resistance. Also, a proper amount of the silane coupling agent may enhance adhesive reliability of the cured product under high-temperature and/or high-humidity conditions.

There is no particular restriction as to the kind of the silane coupling agent, and examples of the silane coupling agent may include γ-glycidoxypropyltrimethoxysilane, γ-glycidoxypropylmethyldiethoxysilane, γ-glycidoxypropyltriethoxysilane, 3-mercaptopropyltrimethoxysilane, vinyltrimethoxysilane, vinyltriethoxysilane, γ-methacryloxypropyltrimethoxysilane, γ-methacryloxypropyltriethoxysilane, γ-aminopropyltrimethoxysilane, γ-aminopropyltriethoxysilane, 3-isocyanatopropyltriethoxysilane, or γ-acetoacetatetripropyltrimethoxysilane, which may be used alone or as mixtures.

The silane coupling agent may be present in an amount of 0.005 to 5 parts by weight based on 100 parts by weight of the base resin. If the amount of the silane coupling agent is less than 0.005 parts by weight, the coupling agent does not work effectively. If the amount of the silane coupling agent is greater than 5 parts by weight, bubbles or peeling of the adhesive can occur, thereby deteriorating durability.

The adhesive composition according to the present invention may further include a tackifier to adjust tack performance.

Examples of the tackifier may include, for example, hydrocarbon resins or hydrogenated products thereof; rosins or hydrogenated products thereof; rosin esters or hydrogenated products thereof; terpene resins or hydrogenated products thereof; terpene phenolic resins or hydrogenated products thereof; and polymerized rosins or polymerized rosin esters, which may be used alone or as mixtures.

The tackifier may be present in an amount of 1 to 100 parts by weight based on 100 parts by weight of the base resin. If the amount of the tackifier is less than 1 part by weight, the tackifier does not work properly. If the amount of the tackifier is greater than 100 parts by weight, improvement in compatibility and/or cohesion becomes insignificant.

The adhesive composition according to the present invention may further include at least one additive selected from the group consisting of epoxy resins, crosslinking agents, UV stabilizers, antioxidants, toning agents, reinforcing agents, fillers, antifoaming agents, surfactants, and plasticizers so long as the additives do not affect aspects of the present invention.

The present invention also relates to an adhesive sheet for a touch panel, which includes an adhesive layer containing a cured product of the adhesive composition according to the present invention.

Fig. 3 is a side-sectional view of an adhesive sheet 30 according to one embodiment of the present invention. As shown in Fig. 3, the adhesive sheet 30 includes an adhesive layer 11 containing a cured sheet product of the adhesive composition according to the present invention.

There is no particular restriction as to a method of manufacturing the adhesive layers by curing the adhesive composition. In some embodiments, the adhesive composition or a coating solution prepared using the same is applied to a proper substrate using a typical instrument, e.g., a bar coater, and cured, thereby preparing an adhesive layer.

Curing may be carried out after volatile components or reaction residues are completely removed from the adhesive composition or the coating solution so as not to cause formation of bubbles. Accordingly, decrease in elastic modulus of the adhesive due to too low a crosslink density or molecular weight may be prevented. Further, it is possible to prevent formation of bubbles between adhesive layers, which can grow into scattering objects.

There is no particular restriction as to a method of curing the adhesive composition or the coating solution. For example, curing may be carried out by properly heating the coating layer or aging the coating layer under predetermined conditions.

In the adhesive sheet, the adhesive layer has a thickness of 15 to 60 μm, preferably 20 to 60 μm. Within this range, the adhesive sheet may be applied to a thin touch panel or touchscreen and also has excellent heat resistance, optical characteristics, cuttability, workability, wettability, and durability.

The adhesive sheet according to the present invention may further comprise a release film formed on one or both sides of the adhesive layer as necessary. Fig. 4 is a side-sectional view of an adhesive sheet according to another embodiment of the present invention. As shown in Fig. 4, the adhesive sheet 40 according to this embodiment may further include release films 41a, 41b formed on opposite surfaces of an adhesive layer 11.

There is no particular restriction as to the kind of the release film to be used in the present invention, and any typical plastic films in the art may be used. Examples of the release film may include a PET film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acetate copolymer film, an ethylene-methyl acetate copolymer film, or a polyimide film. Further, one or both sides of the release film may be subjected to proper release treatment. Examples of a release agent used for release treatment may include alkyd, silicone, fluorine, unsaturated ester, polyolefin, or wax release agents. Among these, alkyd, silicone, and fluorine release agents may be used in terms of heat resistance.

The thickness of the release film may be adjusted properly depending on purpose. For example, the release film has a thickness of 20 to 80 μm, preferably 30 to 70 μm.

The present invention also relates to a touch panel, which comprises a transparent plastic substrate; and an adhesive layer formed on an upper surface of the transparent plastic substrate and including a cured product of the adhesive composition according to the present invention.

A structure of the touch panel is not particularly limited so long as the adhesive composition according to the present invention is applied to the touch panel.

Fig. 5 illustrates a touch panel according to one embodiment of the present invention.

As shown in Fig. 5, the adhesive layer 11 according to this embodiment may be used to bond a window film 51, a conductive laminate 53, and a transparent plastic substrate 54, thereby constituting the touch panel 50.

As shown in Fig. 5, the touch panel 50 according to this embodiment may have a structure in which the transparent plastic substrate 54 is attached to a lower surface of the conductive laminate 53 via the adhesive layers 11 and the window film 51 is stacked on an upper surface of the conductive laminate 53 via a double-sided adhesive sheet 52 prepared by forming the adhesive layers 11 on both surfaces of a base film 52a. In the conductive laminate 53, two sheets of transparent conductive plastic films 53c, 53d each having a conductive layer 53e formed on one surface thereof are disposed to be separated from each other such that the conductive layers 53e face each other, and are stacked via silver paste layers 53c attached to both surfaces of a double-sided adhesive tape (DAT) 53d.

In the touch panel 50 shown in Fig. 5, the transparent plastic substrate 54 may be, for example, a polycarbonate transparent substrate, an acrylic resin transparent substrate (e.g., a poly(methyl methacrylate) transparent substrate), a polyester transparent substrate (e.g., a PET transparent substrate), or a triacetyl cellulose transparent substrate. Among these, a polycarbonate transparent substrate is preferably used.

These examples of the transparent substrate may be used alone or as mixtures, and the substrate may have a single-layer structure or a multilayer structure, e.g., a double-layer structure.

There is no particular restriction as to the thickness of the transparent plastic substrate. In particular, the adhesive according to the present invention has excellent heat resistance, as described above, and thus may prevent even a thin transparent plastic substrate from warping or curling under high-temperature conditions. For example, the transparent plastic substrate has a thickness of 100 μm to 3.0 mm, preferably 250 μm to 2.0 mm, and more preferably 500 μm to 1.0 mm.

In the present invention, there is no particular restriction as to the kind of each element constituting the touch panel 50, i.e., the window film, the transparent conductive plastic film, the base film, the double-sided adhesive tape, or the silver paste, and any element commonly used in the art may be employed.

**Examples**

Next, the present invention will be explained in more detail with reference to examples and comparative examples. These examples are provided for illustrative purposes only.

**Preparative Example 1: Preparation of acrylic resin (A)**

A monomer mixture including 65 parts by weight of butyl acrylate (BA), 25 parts by weight of methyl acrylate (MA), and 10 parts by weight of acrylic acid (AA) was put into a 1L reactor equipped with a reflux condenser for supply of nitrogen gas and for easy temperature adjustment, and 100 parts by weight of ethyl acetate (EAc) as a solvent was added to the reactor. Then, after oxygen was purged from the reactor with nitrogen gas for 1 hour, the mixture was

evenly stirred at 62°C, followed by addition of 0.03 parts by weight of azobisisobutyronitrile (AIBN) diluted with ethyl acetate to 50% as a reaction initiator. Subsequently, the mixture was reacted for about 8 hours to prepare an acrylic resin (A) having a weight average molecular weight of 1,200,000.

**Preparative Example 2: Preparation of acrylic resin (B)**

An acrylic resin (B) having a weight average molecular weight of 1,500,000 was prepared in the same manner as in Preparative Example 1 except that reaction conditions including the content of the reaction initiator were properly adjusted.

**Preparative Example 3: Preparation of acrylic resin (C)**

An acrylic resin (C) having a weight average molecular weight of 700,000 was prepared in the same manner as in Preparative Example 1 except that reaction conditions including the content of the reaction initiator were properly adjusted.

**Preparative Example 4: Preparation of acrylic resin (D)**

An acrylic resin (D) having a weight average molecular weight of 800,000 was prepared in the same manner as in Preparative Example 1 except that reaction conditions including the content of the reaction initiator were properly adjusted.

**Preparative Example 5: Preparation of low molecular weight acrylic compound (E)**

A low molecular weight acrylic compound (E) having a weight average molecular weight of 5,000 was prepared using a monomer mixture including 90 parts by weight of a cyclohexyl methacrylate (CHMA) and 10 parts by weight of acrylic acid (AA) and by properly adjusting preparation conditions in Preparative Example 1.

**Example 1**

100 parts by weight of the acrylic resin (A) prepared in Preparative Example 1 and 0.4 parts by weight of a bifunctional aziridine crosslinking agent as a polyfunctional crosslinking agent were mixed into an adhesive composition, which was then diluted with a solvent, thereby preparing a coating solution. The coating solution was applied to a release-treated surface of a release-treated PET film (thickness: 50 μm) to a thickness of about 50 μm after drying. The product was dried at about 100°C for 5 minutes or longer and then aged under suitable conditions, thereby forming an adhesive layer having a thickness of 50 μm. Then, the adhesive layer was attached to a release-treated surface of a release-treated PET film with a thickness of 50 μm by pressing, thereby producing an adhesive sheet.

**Example 2**

An adhesive sheet was prepared in the same manner as in Example 1 except that an adhesive composition was prepared by mixing 100 parts by weight of the acrylic resin (B) prepared in Preparative Example 2 and 0.4 parts by weight of a bifunctional aziridine crosslinking agent as a polyfunctional crosslinking agent.

**Comparative Example 1**

An adhesive sheet was prepared in the same manner as in Example 1 except that an adhesive composition was prepared by mixing 100 parts by weight of the acrylic resin (C) prepared in Preparative Example 3 and 0.4 parts by weight of a bifunctional aziridine crosslinking agent as a polyfunctional crosslinking agent.

**Comparative Example 2**

An adhesive sheet was prepared in the same manner as in Example 1 except that an adhesive composition was prepared by mixing 100 parts by weight of the acrylic resin (D) prepared in Preparative Example 4, 20 parts by weight of the acrylic low molecular weight compound (E) prepared in Preparative Example 5, and 0.4 parts by weight of a bifunctional aziridine crosslinking agent as a polyfunctional crosslinking agent.

Physical properties of the adhesive sheets prepared in the examples and the comparative example were evaluated as follows.

**1. Dynamic shear strength**

The dynamic shear strength of each adhesive was evaluated as described above with reference to Fig. 1. Specifically, each of the adhesive sheets prepared in the examples and the comparative examples was cut into a 1 in (2.54 cm) x 1 in (2.54 cm) x 50 μm (width x length x thickness) piece. After removing the release film, the adhesive layer 11 was attached to a glass substrate 12 and an ITO PET film 15 including a PET film and an ITO surface formed on one surface of the PET film to be interposed therebetween as shown in Fig. 1. Here, attaching the adhesive was carried out by rolling a 2 kg roller back and forth five times according to ASTM D1002. Then, the dynamic shear strength of the adhesive was evaluated by pulling the glass substrate 12 and the ITO PET film 15 in arrow directions in Fig. 1 at a crosshead speed of 0.8 mm/sec using a tensile tester until the ITO PET film 15 or the glass substrate 12 started separating from the adhesive 11.

**2. Static shear maintenance time**

The static shear maintenance time of each adhesive was evaluated with a sample prepared as shown in Fig. 2. Specifically, each of the adhesive sheets prepared in the examples and the comparative examples was cut into a 2.5 cm (1 in) x 2.5 cm (1 in) x 50 μm (width x length x thickness) piece. After removing the release film, the adhesive layer 11 was attached to a glass substrate 12 and an ITO PET film 15 to be interposed therebetween, as shown in Fig. 2. Here, attaching the adhesive layer 11 was carried out by rolling a 2 kg roller back and forth five times according to ASTM D1002. Then, after hanging a 2kg weight 21 on the ITO PET film 15 at 140°C, time at which the ITO PET film 15 or the glass substrate 12 was separated from the adhesive layer 11 was measured, thereby calculating the static shear maintenance time.

**3. Cuttability**

Each of the adhesive sheets prepared in the examples and the comparative examples was cut into a 10 cm x 10 cm (width x length) sample, a central portion of which was cut in a cross shape. Amount of fibrils generated when enlarging the adhesive sheet at opposite sides of the cut portion was measured to evaluate cuttability as follows.

<Evaluation of cuttability>

◎: No fibrils occurred.
○: Small number of fibrils occurred
Δ: Large number of fibrils occurred
X: Great number of fibrils occurred

**4. Curling**

After removing the release film from each of the adhesive sheets prepared in the examples and the comparative examples, the adhesive layer was attached at one side thereof to a hard coating surface of a polycarbonate film, and at the other side thereof to an ITO layer of a PET film by pressing the PET film on the adhesive layer, thereby preparing a sample. The sample was left in an oven at 140°C for 24 hours, followed by evaluation of curling as follows.

<Evaluation of curling>

◎: Curl less than 5 mm high from base level observed
O: Curl less than 7 mm high from base level observed
Δ: Curl less than 9 mm high from base level observed
X: Curl less than 11 mm high from base level observed

**5. Durability**

After removing the release film from each of the adhesive sheets prepared in the examples and the comparative examples, the adhesive layer was attached at one side thereof to a hard coating surface of a polycarbonate film, and

at the other side thereof to an ITO layer of a PET film by pressing the PET film on the adhesive layer, thereby preparing a sample. The sample was left in an oven at 80°C for 24 hours and then evaluated as to durability by observing whether bubbles, separation, and/or air pockets occurred. Also, the sample was left in an oven at 140°C for 24 hours, followed by evaluation of durability in the same manner.

<Evaluation of durability>

◎: No separation, peeling, and bubbles observed
O: Separation, peeling, and bubbles observed slightly
Δ: Separation, peeling, and bubbles observed considerably
X: Separation, peeling, and bubbles observed remarkably

**6. Adhesive oozing**

Each of the adhesive sheets prepared in the examples and the comparative examples was cut into a 5 cm x 5 cm (width x length) sample. Then, an 8 kg weight was placed on the release film surface of the adhesive sheet at 140°C for 12 hours, followed by observing whether the adhesive oozed out on the edge.

<Evaluation of adhesive oozing>

O: No adhesive oozing out on edge
X: Adhesive oozing out on edge

The results of the evaluation of physical properties are listed in Table 1.

**TABLE 1**

| Category | Example | | Comparative Example | |
|---|---|---|---|---|
| | 1 | 2 | 1 | 2 |
| Dynamic shear strength (kg/$cm^2$) | 9.2 | 7.0 | 5.0 | 1.5 |
| Static shear maintenance time (min) | 40 | 20 | 3 | 1 |
| Cuttability | ◎ | ◎ | Δ | O |
| Curling | ◎ | ◎ | Δ | O |
| Durability (80°C) | ◎ | ◎ | Δ | O |
| Durability (140°C) | O | ◎ | X | X |
| Adhesive oozing | O | O | X | X |

As seen from Table 1, the adhesive sheets according to the examples of the present invention exhibit not only excellent cuttability, but also superior durability and anti-curling properties under high-temperature conditions and do not allow the adhesive to ooze out. However, the adhesive sheets according to the comparative example have inadequate cuttability, anti-curling properties, and durability and allow the adhesive to substantially ooze out.

## Claims

1. An adhesive composition comprising a base resin and a polyfunctional crosslinking agent and satisfying Equation 1:

[Equation 1]

$$X_1 \geq 6\ kg/cm^2,$$

where $X_1$ represents a dynamic shear strength value of an adhesive, which is a cured sheet product of the adhesive composition, the dynamic shear strength of the adhesive being measured at 140°C and a crosshead speed of 0.8 mm/sec using a sample prepared by attaching one side of the adhesive to one surface of an indium tin oxide (ITO) polyethylene terephthalate (PET) film opposite an ITO surface of the PET film and the other side thereof to a glass substrate, followed by storage at room temperature for 24 hours.

**2.** The adhesive composition according to claim 1, wherein $X_1$ is 6.5 to 15 $kg/cm^2$.

**3.** The adhesive composition according to claim 1, wherein the adhesive composition satisfies Equation 2:

[Equation 2]

$$X_2 \geq 10\ min,$$

where $X_2$ represents a static shear maintenance time of an adhesive, which is a cured sheet product of the adhesive composition, the maintenance time of the adhesive being measured at 140°C by applying a load of 2 kg to an ITO PET film of a sample, the sample being prepared by attaching one side of the adhesive to one surface of the ITO PET film opposite an ITO surface of the ITO PET film and the other side thereof to a glass substrate, followed by storage at room temperature for 24 hours.

**4.** The adhesive composition according to claim 3, wherein $X_2$ is 15 minutes or longer, and further wherein the upper limit of the static shear maintenance time is 50 minutes or less.

**5.** The adhesive composition according to claim 1, wherein the base resin comprises an acrylic resin having a weight average molecular weight of 1,000,000 or more.

**6.** The adhesive composition according to claim 5, wherein the acrylic resin comprises a polymer of a monomer mixture including a (meth)acrylic acid ester monomer and a crosslinking monomer.

**7.** The adhesive composition according to claim 6, wherein the crosslinking monomer comprises a hydroxyl group containing monomer, a carboxylic group containing monomer, or a nitrogen containing monomer.

**8.** The adhesive composition according to claim 1, wherein the polyfunctional crosslinking agent comprises at least one selected from the group consisting of isocyanate compounds, epoxy compounds, aziridine compounds, and chelating agents.

**9.** The adhesive composition according to claim 1, wherein the polyfunctional crosslinking agent is present in an amount of 0.01 to 10 parts by weight based on 100 parts by weight of the base resin.

**10.** The adhesive composition according to claim 1, further comprising: a silane coupling agent.

**11.** The adhesive composition according to claim 1, further comprising: a tackifier.

**12.** An adhesive sheet for a touch panel, comprising: an adhesive layer comprising a cured product of the adhesive composition according to claim 1.

**13.** The adhesive sheet according to claim 12, wherein the adhesive layer has a thickness of 15 to 60 $\mu m$.

**14.** The adhesive sheet according to claim 12, further comprising: a release film formed on one or both sides of the adhesive layer.

**15.** A touch panel comprising:

a transparent plastic substrate; and
an adhesive layer formed on an upper surface of the transparent plastic substrate and comprising a cured product of the adhesive composition according to claim 1.

## Patentansprüche

1. Haftzusammensetzung umfassend ein Grundharz und ein polyfunktionelles Vernetzungsmittel, das folgende Gleichung 1 erfüllt:

[Gleichung 1]

$$X_1 \geq 6\ kg/cm^2,$$

wobei $X_1$ einen Wert für die dynamische Scherkraft eines Haftmittels repräsentiert, das ein gehärtetes Folienprodukt der Haftzusammensetzung ist, wobei die dynamische Scherkraft des Haftmittels bei 140 °C und mit einer Kreuzkopfgeschwindigkeit von 0,8 mm/s unter Verwendung einer Probe gemessen wird, die durch Befestigen einer Seite des Haftmittels an einer Oberfläche eines Indium-Zinnoxid (ITO)-Polyethylenterephthalat (PET)-Films gegenüber einer ITO-Oberfläche des PET-Films und die andere Seite davon an einem Glassubstrat hergestellt wird, gefolgt von einer 24 Stunden langen Aufbewahrung bei Raumtemperatur.

2. Haftzusammensetzung nach Anspruch 1, wobei $X_1$ 6,5 bis 15 $kg/cm^2$ ist.

3. Haftzusammensetzung nach Anspruch 1, wobei die Haftzusammensetzung Gleichung 2 erfüllt:

[Gleichung 2]

$$X_2 \geq 10\ min,$$

wobei $X_2$ eine statische Schererhaltungszeit eines Haftmittels repräsentiert, das ein gehärtetes Folienprodukt der Haftzusammensetzung ist, wobei die Erhaltungszeit des Haftmittels bei 140 °C unter Anlegen einer Last von 2 kg an einen ITO-PET-Film einer Probe gemessen wird, wobei die Probe durch Befestigen einer Seite des Haftmittels an einer Oberfläche des ITO-PET-Films gegenüber einer ITO-Oberfläche des ITO-PET-Films und die andere Seite davon an einem Glassubstrat hergestellt wird, gefolgt von einer 24 Stunden langen Aufbewahrung bei Raumtemperatur.

4. Haftzusammensetzung nach Anspruch 3, wobei $X_2$ 15 Minuten oder länger ist und wobei weiterhin der obere Grenzwert der statischen Schererhaltungszeit 50 Minuten oder weniger beträgt.

5. Haftzusammensetzung nach Anspruch 1, wobei das Grundharz ein Acrylharz mit einem gewichtsgemittelten Molekulargewicht von 1.000.000 oder mehr aufweist.

6. Haftzusammensetzung nach Anspruch 5, wobei das Acrylharz ein Polymer einer Monomermischung umfassend ein (Meth)acrylsäureestermonomer und ein Vernetzungsmonomer umfasst.

7. Haftzusammensetzung nach Anspruch 6, wobei das Vernetzungsmonomer ein eine Hydroxylgruppe enthaltendes Monomer, ein eine Carboxylgruppe enthaltendes Monomer oder ein Stickstoff enthaltendes Monomer umfasst.

8. Haftzusammensetzung nach Anspruch 1, wobei das polyfunktionelle Vernetzungsmittel mindestens eine Verbindung, ausgewählt aus der Gruppe, bestehend aus Isocyanatverbindungen, Epoxyverbindungen, Aziridinverbindungen und Chelatierungsmittel umfasst.

9. Haftzusammensetzung nach Anspruch 1, wobei das polyfunktionelle Vernetzungsmittel in einer Menge von 0,01 bis 10 Gew.-Teilen bezogen auf 100 Gew.-Teile des Grundharzes vorhanden ist.

10. Haftzusammensetzung nach Anspruch 1, weiterhin umfassend: ein Silan-Kupplungsmittel.

**11.** Haftzusammensetzung nach Anspruch 1, weiterhin umfassend: ein klebrig machendes Mittel.

**12.** Haftfolie für einen Berührungsbildschirm, umfassend: eine Haftschicht, umfasssend ein gehärtetes Produkt der Haftzusammensetzung nach Anspruch 1.

**13.** Haftfilm nach Anspruch 12, wobei die Haftschicht eine Dicke von 15 bis 60 $\mu$m aufweist.

**14.** Haftfolie nach Anspruch 12, weiterhin umfassend: einen auf einer oder beide Seiten der Haftschicht ausgebildeten Ablösefilm.

**15.** Berührungsbildschirm, umfassend:

ein transparentes Kunststoffsubstrat und
eine Haftschicht, die auf einer oberen Oberfläche des transparenten Kunststoffsubstrats ausgebildet ist und ein gehärtetes Produkt der Haftzusammensetzung nach Anspruch 1 umfasst.

## Revendications

**1.** Composition adhésive comprenant une résine de base et un agent de réticulation polyfonctionnel et étant conforme à l'équation 1 :

[Équation 1]

$$X_1 \geq 6 \text{ kg/cm}^2,$$

où $X_1$ représente une valeur de résistance au cisaillement dynamique d'un adhésif, qui est un produit en feuille durci de la composition adhésive, la résistance au cisaillement dynamique de l'adhésif étant mesurée à 140°C et à une vitesse de traverse de 0,8 mm/s en utilisant un échantillon préparé en fixant une face de l'adhésif sur une surface d'un film de polyéthylène téréphtalate (PET) d'oxyde d'étain et d'indium (ITO) face à une surface en ITO du film de PET et l'autre face de celui-ci sur un substrat de verre, ceci étant suivi d'un stockage à température ambiante pendant 24 heures.

**2.** La composition adhésive selon la revendication 1, dans laquelle $X_1$ est de 6,5 à 15 kg/cm$^2$.

**3.** La composition adhésive selon la revendication 1, dans laquelle la composition adhésive est conforme à l'équation 2 :

[Équation 2]

$$X_2 \geq 10 \text{ mn},$$

où $X_2$ représente un temps de maintien en cisaillement statique d'un adhésif, qui est un produit en feuille durci de la composition adhésive, le temps de maintien de l'adhésif étant mesuré à 140°C en appliquant une charge de 2 kg sur un film de PET ITO d'un échantillon, l'échantillon étant préparé en fixant une face de l'adhésif sur une surface du film de PET ITO face à une surface en ITO du film de PET ITO et l'autre face de celui-ci sur un substrat de verre, ceci étant suivi d'un stockage à température ambiante pendant 24 heures.

**4.** La composition adhésive selon la revendication 3, dans laquelle $X_2$ est supérieur ou égal à 15 minutes, et dans laquelle, en outre, la limite supérieure du temps de maintien en cisaillement statique est inférieure ou égale à 50 minutes.

**5.** La composition adhésive selon la revendication 1, dans laquelle la résine de base comprend une résine acrylique de masse moléculaire moyenne en poids supérieure ou égale à 1 000 000.

**6.** La composition adhésive selon la revendication 5, dans laquelle la résine acrylique comprend un polymère d'un mélange de monomères incluant un monomère d'ester d'acide (méth)acrylique et un monomère de réticulation.

7. La composition adhésive selon la revendication 6, dans laquelle le monomère de réticulation comprend un monomère contenant un groupe hydroxyle, un monomère contenant un groupe carboxylique ou un monomère contenant de l'azote.

8. La composition adhésive selon la revendication 1, dans laquelle l'agent de réticulation polyfonctionnel comprend au moins un composé choisi dans le groupe consistant en : composés isocyanate, composés époxy, composés aziridine et agents chélateurs.

9. La composition adhésive selon la revendication 1, dans laquelle l'agent de réticulation polyfonctionnel est présent dans une quantité de 0,01 à 10 parties en poids sur la base de 100 parties en poids de la résine de base.

10. La composition adhésive selon la revendication 1, comprenant en outre un agent de pontage silane.

11. La composition adhésive selon la revendication 1, comprenant en outre un agent d'adhésivité.

12. Feuille adhésive destinée à un panneau tactile, comprenant une couche adhésive comprenant un produit durci de la composition adhésive selon la revendication 1.

13. La feuille adhésive selon la revendication 12, dans laquelle la couche adhésive possède une épaisseur de 15 à 60 μm.

14. La feuille adhésive selon la revendication 12, comprenant en outre un film de démoulage formé sur l'une ou sur les deux faces de la couche adhésive.

15. Panneau tactile comprenant :

un substrat en plastique transparent ; et
une couche adhésive formée sur une surface supérieure du substrat en plastique transparent et comprenant un produit durci de la composition adhésive selon la revendication 1.

【FIG.1】

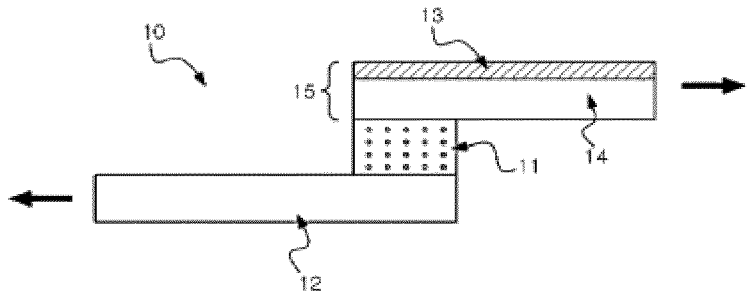


【FIG.2】

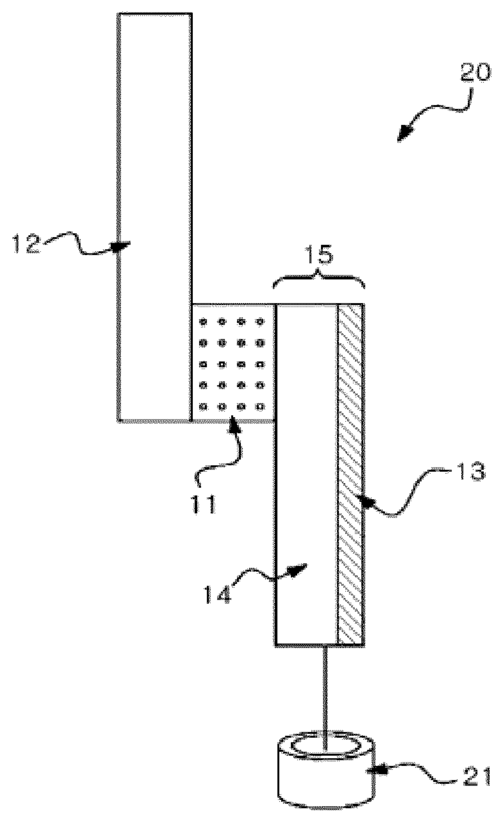

【FIG.3】

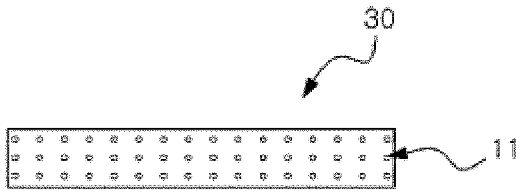


【FIG.4】

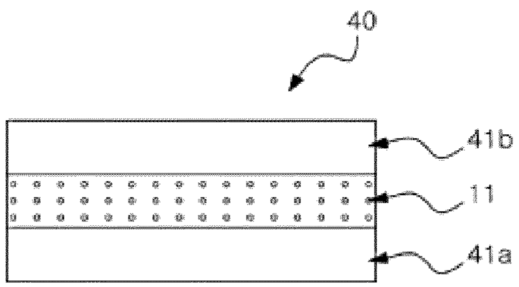


【FIG.5】

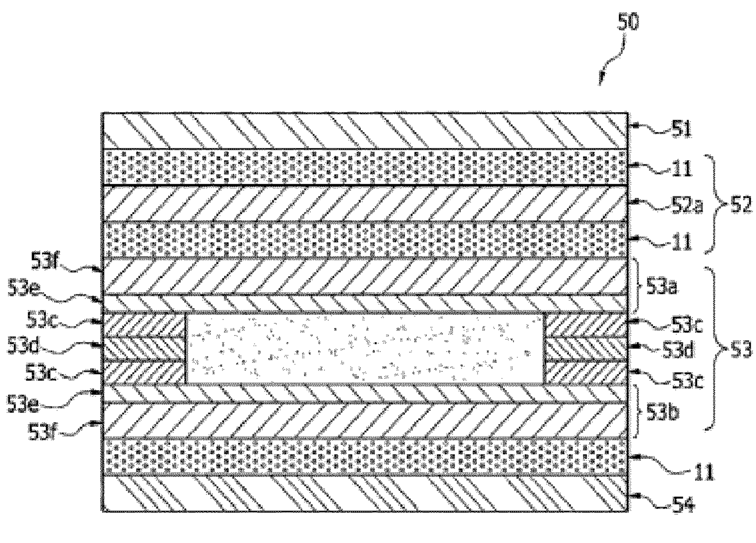

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20060043847
- EP 0955336 A
- EP 2557136 A